Europäisches Patentamt

**European Patent Office**

**Office européen des brevets**

(11) Numéro de publication: **0 201 431 B1**

(12) **FASCICULE DE BREVET EUROPEEN**

(45) Date de publication de fascicule du brevet:
**29.01.92**

(21) Numéro de dépôt: **86400991.5**

(22) Date de dépôt: **07.05.86**

(51) Int. Cl.⁵: **G11B 27/28**, G11B 27/036,
H04N 7/087, H04N 5/92

(54) **Système d'insertion et de restitution de données numériques utilisant un code temporel lié à un programme enregistré sur magnétoscope.**

(30) Priorité: **09.05.85 FR 8507037**

(43) Date de publication de la demande:
**17.12.86 Bulletin 86/46**

(45) Mention de la délivrance du brevet:
**29.01.92 Bulletin 92/05**

(84) Etats contractants désignés:
**AT BE DE GB**

(56) Documents cités:
**DE-A- 2 431 988**
**DE-A- 2 943 389**
**DE-A- 2 943 390**
**FR-A- 2 524 237**
**US-A- 3 681 524**

**RUNDFUNKTECHNISCHE MITTEILUNGEN, vol. 22, no. 1, février 1978, pages 1-9, Hamburg, DE: H. HOFMANN et al.: "Anlage zur Aufbereitung und Einblendung von Untertiteln nach dem englischen Teletext-Standard"**

(73) Titulaire: **Etablissement Public de Diffusion dit "Télédiffusion de France"**
**21-27 rue Barbès**
**F-92120 Montrouge(FR)**

Titulaire: **ETAT FRANCAIS représenté par le Ministre des PTT (Centre National d'Etudes des Télécommunications)**
**38-40 rue du Général Leclerc**
**F-92131 Issy-les-Moulineaux(FR)**

(72) Inventeur: **Gerard, Christian**
**17, rue Francis Monnoyeur**
**F-35530 Noyal Sur Vilaine(FR)**

(74) Mandataire: **Mongrédien, André et al c/o BREVATOME 25, rue de Ponthieu**
**F-75008 Paris(FR)**

IEEE TRANSACTIONS ON CONSUMER ELEC-
TRONICS, vol. CE-25, no. 3, juillet 1979, pages 256-257, IEEE, New York, US; H.G. BOWN
et al.: "Telidon: A new approach to videotex
system design"

FUNKSCHAU, vol. 57, no. 18, 30 août 1985,
pages 26,28, München, DE;
"Compact-Disc-Spieler: Geheimnisvolle
Buchse"

# Description

La présente invention a pour objet un système d'insertion de données numériques dans un code temporel lié à un programme audiovisuel enregistré sur magnétoscope. La restitution de ces données est faite lors de la lecture du programme audiovisuel, par le même système.

Le développement de la télévision par câble a entraîné la nécessité d'une automatisation des centres locaux chargés de la lecture des programmes audiovisuels. De plus, ces programmes audiovisuels pourront avoir un caractère purement local. Par conséquent, chaque société chargée d'exploiter localement un câble devra posséder des systèmes de création ou de personnalisation des programmes diffusés, lesquels auront été enregistrés au préalable.

Le système proposé par la présente invention permet de remplir ces deux fonctions.

Les domaines techniques d'application dans les réseaux sont respectivement :
- la transmission par câble (câble coaxial ou fibre optique),
- la diffusion (emploi des ondes hertziennes).

En dehors des réseaux, le système proposé trouve des applications directes dans le vaste domaine des équipements informatiques privés, que l'on désigne généralement par "privatique". C'est le cas par exemple de l'étude assistée par ordinateur (EAO).

Pour chaque domaine d'application, un environnement "type" sera donné comme exemple par la suite afin de faciliter la description du système. Le système en soi est d'ailleurs identique quel que soit le type d'application retenu.

Le document FR-A-2 524 237 décrit un appareil d'enregistrement de signaux vidéo qui est conçu de façon à pouvoir enregistrer simultanément un signal son codé. Cet appareil suppose que le signal vidéo est enregistré sur des pistes obliques balayées hélicoîdalement. Le signal son est alors enregistré à une extrémité prolongée de ces pistes. Un tel appareil est strictement limité au cas des pistes obliques.

La présente invention ne se limite pas à ce cas particulier mais vise au contraire la catégorie plus vaste des enregistrements vidéo accompagnés de ce qu'il est convenu d'appeler des "codes temporels".

L'utilisation croissante des magnétoscopes pour assurer la création et la distribution de programmes audiovisuels de plus en plus sophistiqués a entraîné la nécessité de pouvoir réaliser des montages de façon rapide et précise. Pour répondre à ce besoin, deux codes temporels respectivement de type "longitudinal" et "vertical" ont fait l'objet de normalisations antérieures.

Les systèmes de télévision à 625 lignes et 50 trames conformes aux rapports 308-2 et 407-1 du CCIR (Comité Consultatif International des Radiocommunications) utilisent le code normalisé de l'UER (Union Européenne des Radiocommunications) édité comme document technique portant la référence 3097 en octobre 1972 :

a - Le code temporel longitudinal occupe une piste complète du support magnétique, bande magnétique ou cassette selon le format d'enregistrement. Les magnétoscopes de qualité "radiodiffusion" possèdent une piste spécialement réservée à ce code ; on parle alors de "piste d'ordres". Les magnétoscopes au format 3/4 de pouce dits "institutionnels" ne possèdent pas cette piste supplémentaire. En pratique, on peut utiliser l'une des deux pistes audiofréquences pour enregistrer le code temporel longitudinal. La principale information contenue dans ce code, constituée de 80 éléments binaires par image de télévision, est une information temporelle exprimée en heures, minutes, secondes et en numéros d'image.

b - Le code temporel vertical est destiné à compléter le code temporel longitudinal dans le cas de magnétoscopes de qualité "radiodiffusion" qui permettent la lecture en arrêt sur image ou en ralenti, opérations au cours desquelles il est impossible d'utiliser le code temporel longitudinal sans risque d'erreur. Ce code appelé aussi code temporel de trame, est constitué de 90 éléments binaires par image de télévision ; il est placé sur deux lignes non consécutives de la suppression trame du signal vidéo enregistré.

Des informations supplémentaires, dont le contenu n'est pas précisé, peuvent être insérées l'initiative de l'utilisateur dans ces deux codes temporels. Ces informations sont alors incluses dans des bits appelés "bits utilisateur" et sont constitués de 32 éléments binaires par image de télévision, soit 4 octets toutes les 40 ms avec le code temporel longitudinal. Une telle application des "bits utilisateur" est illustrée dans US-A-3681524.

La présente invention a pour objet un système qui permet une utilisation particulière de ces éléments binaires que sont les "bits utilisateur".

Une succession d'éléments binaires permet de compléter l'information visuelle contenue sur le support audiovisuel. En particulier, on peut stocker des pages sous forme vidéographique ou des directives sur le déroulement du programme audiovisuel ou encore toute autre information qui peut enrichir le service.

Les pages de type vidéographique regroupent la vidéographie diffusée (ANTIOPE en France), la vidéographie interactive (VIDEOTEX et TELETEL en France) ainsi que l'alpha mosaïque et l'alpha géométrique (norme dite CEPT signifiant ConférenceEuropéenne des Postes et Télécommunications).

L'ensemble de ces informations binaires peut être introduit par le système de l'invention, dans les emplacements réservés aux "bits utilisateur" lors d'une opération d'insertion. Il est ainsi possible d'ajouter un nombre important d'informations sur une partie du support magnétique, sans altérer le contenu du programme audiovisuel enregistré au préalable.

Lors d'une opération de lecture de ce programme, ce même système traite l'ensemble des informations binaires afin de les restituer sous la forme d'une succession de pages vidéographiques, ou de les interpréter comme un langage de commande, ce qui permet une automatisation de l'exploitation.

On connaît déjà des techniques de stockage de données associées à un vidéogramme. Si l'on considère par exemple un signal conforme à la norme DIDON ("Diffusion de Données Numériques"), ce signal n'est pas enregistrable sur la piste vidéo d'un magnétoscope 3/4 de pouce. Cette impossibilité est, dans ce format d'enregistrement, inhérente au principe d'enregistrement du signal vidéofréquence. Avec un magnétoscope 1 pouce, les informations binaires sont affectées d'un taux d'erreur résiduel trop important pour assurer une bonne utilisation de celles-ci. De plus, cette dégradation du taux d'erreur n'est pas négligeable lors de recopies multiples. C'est la raison pour laquelle un tel signal est plutôt enregistré sur un support totalement séparé, par exemple un disque souple ou une cassette de bande comme dans le système décrit dans le document "Rundfunktechnische Mitteilungen", Jahrgany 22, Heft 1, 1978 p.1-9.

Cette technique de stockage et celle de l'invention possèdent approximativement la même capacité de stockage. Actuellement les disques souples de 8 pouces, double face et double densité ont une capacité maximum de stockage de 512 Koctets (avec K = 1024). Une utilisation des "bits utilisateur" du code temporel longitudinal pendant 1 heure permet de stocker 360 Koctets contre 720 Koctets en utilisant le code temporel vertical. Néanmoins, il est préférable d'utiliser le code temporel longitudinal afin d'assurer le stockage des données numériques relatives à la présente invention. En effet, il est important de se préserver au maximum des pertes de niveau, toujours possibles.

Il est plus aisé de traiter le faible débit de 2 K bit/s du code temporel longitudinal plutôt que le débit de 1,8 M bit/s du code temporel vertical, pour lequel il faut aussi tenir compte de l'instant de commutation des têtes vidéofréquences du magnétoscope afin de ne pas créer une rupture éventuelle du code.

Pour l'ensemble de ces raisons, seule l'utilisation du code temporel longitudinal est mentionnée dans la suite de la description mais une utilisation du code temporel vertical reste toujours possible du fait que le système proposé est compatible avec les deux codes temporels.

L'un des avantages du système proposé par rapport aux techniques antérieures est l'unicité du support d'enregistrement. Cette unicité du support se traduit par une facilité d'exploitation lors de la lecture des programmes audiovisuels, et permet d'éviter toute erreur de manipulation. Les échanges de programmes entre sociétés locales d'exploitation d'un câble se trouveront ainsi simplifiés.

Pour l'aspect matériel, le lecteur de disques souples n'est plus nécessaire, ce qui permet de réaliser une économie sur le coût du système d'exploitation. De plus, on peut supposer que les bandes magnétiques seront étiquetées et identifiées au moyen d'un en-tête inscrit dans les "bits utilisateur" du code temporel longitudinal. Ce mécanisme de gestion des "bits utilisateur" sera mis en place dans les futures sociétés locales d'exploitation du câble ; le même matériel pourra donc être utilisé pour cette fonction et pour le dispositif décrit par la suite.

En résumé, le système de l'invention est particulièrement bien adapté à l'insertion d'informations supplémentaires de faible ou moyenne densité. L'emploi du disque souple reste intéressant pour de grandes quantités d'information. Aini les deux techniques de stockage s'avèrent-elles être complémentaires.

Les informations visuelles supplémentaires associées à un programme audiovisuel peuvent être présentées, soit dans leur ensemble soit partiellement, sur simple initiative de l'exploitant du système. Pour réaliser cette présentation facultative chaque page vidéographique est repérée par un numéro.

Lors de leur présentation, ces pages peuvent être présentées en mode "page" ou en mode "incrustation" :

a - En mode "page", le programme audiovisuel provenant du magnétoscope est momentanément interrompu pour être remplacé par la page ou par une succession de pages vidéographiques. La commutation entre ces deux programmes de nature différente doit être faite sans gêne visuelle. Par conséquent, ces deux programmes doivent être synchrones et commutés dans l'intervalle vertical du signal. De plus, il est préférable que le programme audiovisuel se termine sur un changement de plan avant d'être remplacé par les informations vidéographiques.

b - En mode "incrustation", il n'y a pas interruption dans le déroulement du programme audiovisuel. A un instant choisi au préalable par l'opérateur, l'information visuelle supplémentaire issue de ce dispositif vient s'ajouter à l'image d'origine. Dans ce cas, les deux programmes doivent être aussi synchrones.

Les domaines d'application du système de l'invention sont variés et dépendent du mode de présentation retenu. De plus, sur un même support audiovisuel, les deux modes de présentation décrits ci-dessus, peuvent être utilisés alternativement :

. Sur certains réseaux câblés, des pages vidéographiques peuvent être utilisées pour diffuser de courtes séquences publicitaires d'intérêt local ou servir d'animation dans une télévidéothèque ou dans une tête de réseau.

. En mode "incrustation", une ou plusieurs inscriptions différentes peuvent être placées en divers endroits de l'image destinée au câble. Des informations de sous titrage peuvent aussi s'avérer très utiles dans les cas de distribution et de diffusion.

. Des cours audiovisuels ou des exposés peuvent être complétés par des cartes ou des schémas. Leur présentation facultative peut permettre d'adapter les cours et de les personnaliser en fonction de l'auditoire.

Un calcul rapide montre que la capacité de stockage, avec le système de l'invention est assez importante. L'emploi du code temporel longitudinal permet en effet de stocker 360 pages vidéographiques de 1 Koctet chacune, sur une bande magnétique de durée de 1 heure.

Les autres informations numériques, de type directive sur le déroulement du programme audiovisuel par exemple, sont contenues en plus faible quantité et ces informations sont négligeables vis-à-vis du code relatif à une page vidéographique.

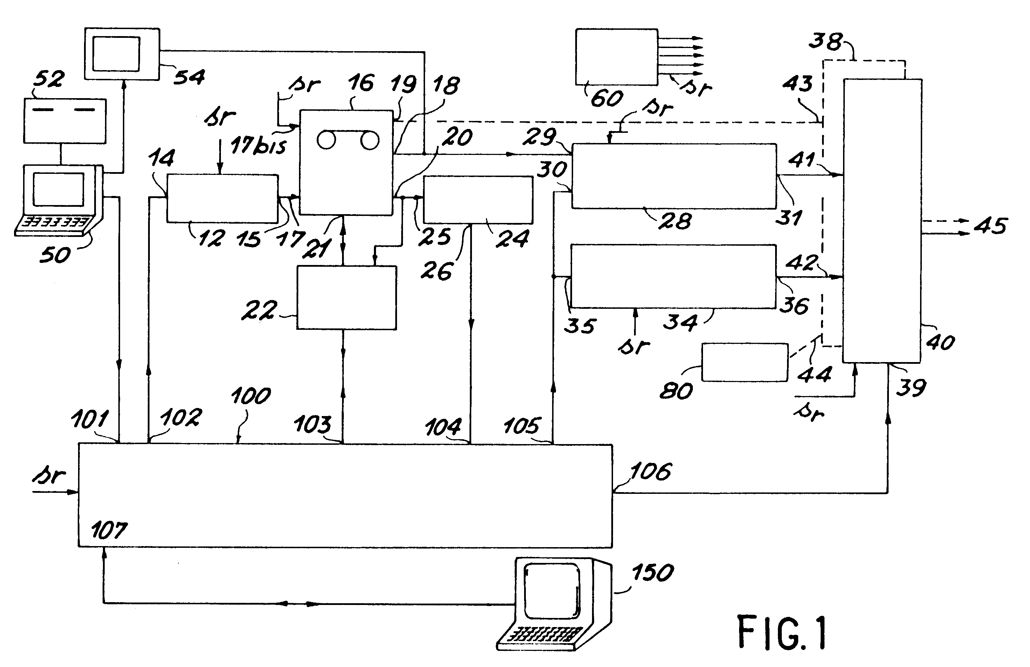

Pour mieux comprendre le fonctionnement du système de l'invention, que l'inventeur désigne en abrégé par système S.I.G.N.E.T. (Système d'Insertion et de Générations Numériques Enregistrés Temporellement), deux environnements type vont d'abord être décrits : le premier exemple concerne un réseau public. L'environnement complet du système est présenté en figure 1.

Tel que représenté, l'équipement comprend un générateur de code temporel 12, ayant une entrée 14 et une sortie 15, un magnétoscope U-matic standard 16 ayant des entrées 17 (code temporel), 17bis (signal de référence sur l'entrée vidéo), les sorties 18 (vidéo), 19 (audio), 20 (code temporel) et une entrée-sortie 21 (télécommande), une interface de télécommande du magnétoscope 22, un lecteur de code temporel 24 ayant une entrée 25 et une sortie 26, un ensemble d'incrustation vidéographique 28 ayant deux entrées 29 et 30 et une sortie 31, un ensemble de décodage de pages vidéographiques 34 ayant une entrée 35 et une sortie 36, des grilles de commutation audio 38 et vidéo 40 ayant chacune deux entrées 41 et 42 pour la grille vidéo reliées aux ensembles 28 et 34 et les entrées 43 et 44 pour la grille audio reliées aux ensembles 16 et 80, une entrée de commande 39 commune aux deux grilles et des sorties 45 délivrant un programme audiovisuel. La source sonore 80 est facultative et peut accompagner une ou plusieurs pages vidéographiques présentées en mode "page".

L'équipement représenté comprend encore une source 50 de composition des pages vidéographiques, cette source étant reliée à un lecteur de disques souples 52 et à un moniteur 54. Un générateur de synchronisation 60 délivre des signaux de référence sr appliqués au générateur 12, au magnétoscope 16, aux ensembles de décodage et d'incrustation 28 et 34, à la grille de commutation vidéo 40 et au système 100.

L'équipement représenté comprend en outre un système 100 qui est l'objet de la présente invention. Ce système comprend une entrée 101 reliée à la source 50 de composition des pages vidéographiques, une sortie 102 reliée à l'entrée 14 du générateur de code temporel 12, un accès bidirectionnel 103 relié au magnétoscope 16 à travers l'interface 22, une entrée 104 reliée à la sortie 26 du lecteur de code temporel 24, une sortie 105 reliée à l'entrée 30 de l'ensemble d'incrustations vidéographiques 28 et à l'entrée 35 de l'ensemble de décodage de pages vidéographiques 34, une sortie 106 reliée à l'entrée 39 commune aux deux grilles de commutation 38 et 40.

L'ensemble représenté comprend encore une console d'exploitation 150 reliée au système 100 par un accès bidirectionnel 107 recevant les ordres suivants : attribut de présentation, numéro de page vidéographique, stockage, insertion, lecture du programme audiovisuel, liste des pages vidéographiques à diffuser, points d'arrêt par page ou par séquence de pages, contenu des fonctions à réaliser et télécommande du magnétoscope.

Le fonctionnement des principaux équipements externes au système est le suivant.

Le générateur de code temporel 12 élabore l'information "temps" destinée à être enregistrée sur l'une des pistes longitudinales du magnétoscope 16 (piste audio ou piste d'ordres selon le format d'enregistrement). Cet appareil reçoit les informations binaires stockées temporairement et mises au bon format par le système 100.

Le générateur de code temporel 12 doit permettre une programmation dynamique des "bits utilisateur" au rythme des images de télévision.

Le lecteur de code temporel 24 désérialise le code lu par le magnétoscope 16 et restitue les 32 "bits utilisateur" par image de télévision.

L'interface 22 de télécommande du magnétoscope assure une automatisation totale. Cette interface permet essentiellement :

- de télécommander le magnétoscope,
- de repérer une image particulière ou une séquence audiovisuelle,
- de rechercher automatiquement une séquence audiovisuelle,
- de signaler, en mode lecture, le passage sur une image particulière,
- de détecter et de signaler les défauts de mise en oeuvre du magnétoscope (bande cassée par exemple).

Il faut observer que le lecteur de code temporel 24 et l'interface de télécommande de magnétoscope 22 peuvent être regroupés dans un même appareil.

Pour le mode "page", l'ensemble de décodage de pages vidéographiques 34 utilise :

- un décodeur vidéographique,
- un désaturateur de couleurs,
- un codeur SECAM pour les pays utilisateurs de ce codage de la couleur, ou tout autre type de codeur (PAL ou NTSC)

Pour le mode "incrustation" l'ensemble d'incrustation 28 est constitué par :

- un décodeur vidéographique synchronisé,
- un décodeur de signal vidéo composite (NTSC, PAL ou SECAM),
- un mélangeur de signaux,
- un codeur SECAM, en France par exemple.

Les deux ensembles 28 et 34 reçoivent les codes vidéographiques issus du système 100 et engendrent une page vidéographique sous la forme d'un signal vidéofréquence composite. Ces deux ensembles 28 et 34 ne sont pas obligatoires. On peut en effet utiliser un seul de ces deux ensembles lorsqu'un seul mode de présentation a été retenu par l'exploitant du système.

La constitution interne de ces deux ensembles vidéographiques n'a été donnée qu'à titre indicatif. Un codage de la vidéofréquence composite en PAL par exemple, simplifie l'opération de mélange des signaux mais ne change rien au fonctionnement du système proposé.

Les grilles de commutation audio 38 et vidéo 40 sont commandées en simultané par le système. Pour améliorer le confort visuel des programmes destinés aux utilisateurs, la grille vidéofréquence 40 peut posséder un dispositif de validation des instants de commutation dans la suppression trame. Lors d'une utilisation en mode "page" la grille vidéo 40 est commutée sur l'entrée 42, tandis que dans les modes "incrustation" ou "lecture du programme audiovisuel", cette même grille est alors commutée sur l'entrée 41.

La source de composition vidéographique 50 est couplée à un lecteur de disques souples 52 lors de modifications mineures de pages existantes, ou d'insertions multiples de plusieurs pages vidéographiques identiques.

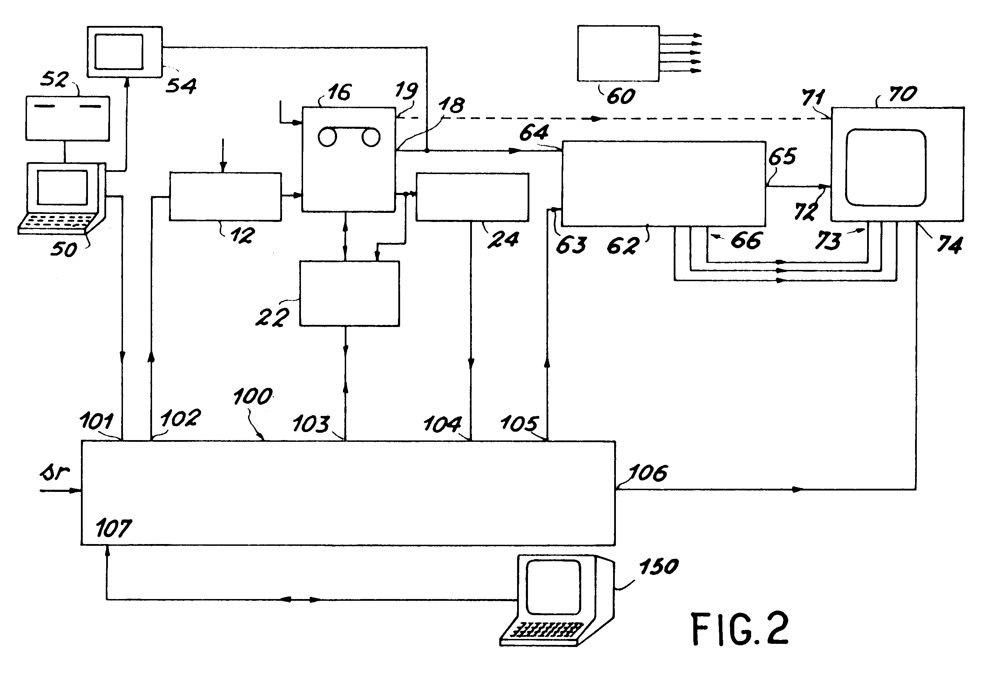

Un autre type d'environnement est illustré à titre d'exemple sur la figure 2, de manière légèrement simplifiée par rapport à l'environnement précédent. Il s'agit d'une utilisation en privatique.

Le système représenté sur la figure 2 diffère de celui de la figure 1 par la partie située en aval du magnétoscope. On y trouve un décodeur vidéographique synchronisé 62 à une première entrée 63 reliée à la sortie 105 du système 100 et à une seconde entrée 64 reliée à la sortie 18 du magnétoscope, sortie qui délivre le signal vidéo. Ce décodeur possède une sortie 65 délivrant un signal vidéo et des sorties 66 délivrant des signaux de pages vidéographiques sous forme de composantes RVB.

L'équipement représenté comprend encore un téléviseur 70, ayant une entrée audio 71 reliée à la sortie 19 du magnétoscope et une entrée vidéo 72 reliée à la sortie 65 du décodeur 62. Le téléviseur comprend aussi des entrées 73 de composantes RVB reliées aux sorties 66 du décodeur 62 et une entrée 74 reliée à la sortie 106 du système 100 et recevant un signal de commutation.

Dans cet équipement, l'ensemble de décodage des pages vidéographiques est réduit au décodeur 62. Cet appareil délivre les pages vidéographiques sous la forme de composantes R-V-B. Ces composantes sont directement présentées au téléviseur 70 sur l'entrée 73. La sélection vidéofréquence-pages vidéographiques est assurée à l'aide du signal de commutation appliqué sur l'entrée 74. Les entrées 71, 72, 73 et 74 du téléviseur 70 sont regroupées dans une prise de péritélévision normalisée par le SCART (Syndicat des Constructeurs d'Appareils Radiorécepteurs et Téléviseurs). Les grilles de commutation audio et vidéo présentes dans l'exemple précédent ne sont donc plus nécessaires lors d'une utilisation en privatique.

En conclusion, on voit que l'ensemble de l'environnement du système de l'invention ne fait pas appel à un matériel spécifique. Tout ce matériel est disponible sur le marché et seul le système S.I.G.N.E.T. qui fait l'objet de la présente demande est un équipement spécifique.

De façon précise, l'invention a pour objet un système d'insertion et de restitution de données numériques utilisant un code temporel lié à un programme audiovisuel enregistré sur magnétoscope. Ce système comprend essentiellement 9 blocs fonctionnels : une mémoire centrale, un générateur d'adresses, deux circuits de conversion numérique, un circuit de sérialisation du code, un circuit de commutation, un circuit de désérialisation du code vidéographique, un circuit d'interface série et un circuit de gestion. Un bus relie tous les blocs.

Les caractéristiques de l'invention apparaîtront mieux après la description qui suit d'un exemple de réalisation donné à titre explicatif et nullement limitatif. Cette description se réfère à des dessins annexés sur lesquels :

- la figure 1, déjà décrite, illustre un premier exemple d'environnement du système correspondant à un réseau de diffusion ;
- la figure 2, déjà décrite, illustre un autre exemple d'environnement du système correspondant à une installation privée ;
- la figure 3 est un schéma synoptique du système de l'invention ;
- la figure 4 est un organigramme fonctionnel retenu pour l'enregistrement des données numériques ;
- la figure 5 représente la structure des informations binaires à enregistrer ;
- la figure 6 illustre la relation temporelle qui existe entre le programme audiovisuel et les séquences de pages vidéographiques ;
- la figure 7 est un organigramme fonctionnel retenu pour la lecture des données numériques ;
- la figure 8 montre les circuits mis en jeu lors d'une opération de définition des instants de visualisation des pages ;
- la figure 9 montre les circuits mis en jeu lors de l'opération de mise en mémoire du code relatif à une page ;
- la figure 10 montre les circuits mis en jeu lors du transfert des données de la mémoire vers le magnétoscope ;
- la figure 11 montre les circuits mis en jeu lors du chargement de la mémoire ;
- la figure 12 montre les circuits mis en jeu lors de la lecture de la mémoire.

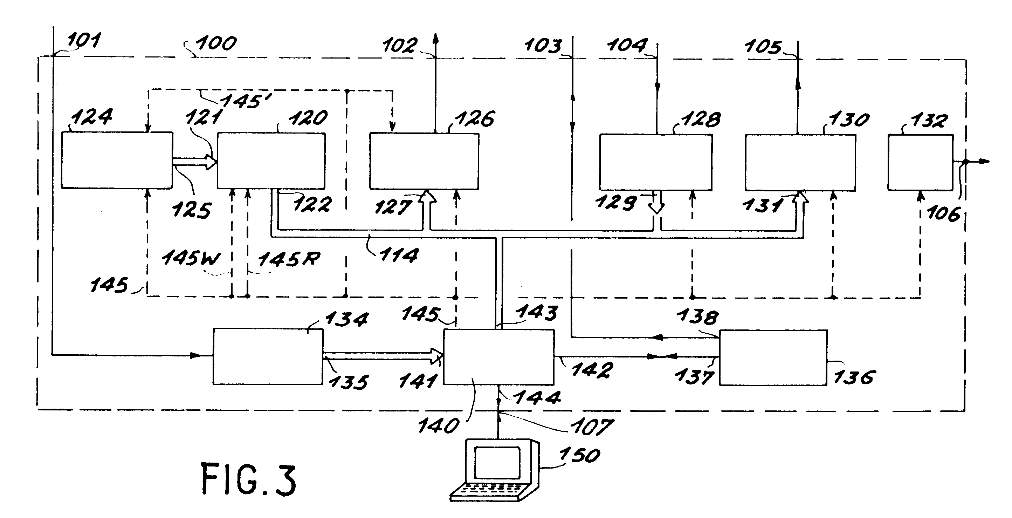

Le système représenté sur la figure 3 comprend un ensemble de circuits reliés par un bus de données 114, qui est supposé travailler dans l'exemple illustré avec p = 8 éléments binaires ou bits. Ces circuits se composent essentiellement d'une mémoire centrale 120 ayant une entrée d'adressage 121 et une entrée-sortie d'écriture-lecture 122 ; un circuit de conversion 126 qui convertit les mots de p = 8 bits appliqués sur son entrée 127 en mots de q = 32 bits délivrés à sa sortie, laquelle est reliée à la sortie générale 102 du système ; un circuit de conversion 128 ayant une entrée reliée à l'entrée générale 104 et recevant des mots de q = 32 bits qu'il convertit en mots de p = 8 bits délivrés sur une sortie 129 reliée au bus de données ; un circuit 130 de sérialisation du code ayant une entrée 131 reliée au bus de données 114 et une sortie reliée à la sortie générale 105 du système ; un circuit générateur d'adresses 124 ayant une sortie 125 reliée l'entrée d'adressage 121 de la mémoire 120 par un bus d'adresse ; un circuit 134 de désérialisation du code vidéographique, possédant une entrée reliée à l'entrée générale du système 101 et une sortie 135 délivrant un code vidéographique ; un circuit interface-série 136 ayant un accès bidirectionnel 137 et une sortie 138 reliée à la sortie générale 103 ; un circuit de commutation 132 dont la sortie est reliée à la sortie générale 106.

Tous ces circuits sont commandés par un circuit de gestion 140 qui possède un premier accès 141 recevant le code vidéographique délivré par le circuit 134, un second accès 142 relié au circuit d'interface-série 136, un troisième accès de données 143 relié au bus de données 114, et un quatrième accès 144 relié la sortie générale 107. Le circuit de gestion délivre en outre, sur une connexion 145, des ordres d'activation qui sont appliqués au circuit générateur d'adresses 124, au circuit de conversion référencé 126, au circuit de conversion référencé 128, au circuit de sérialisation du code 130 et enfin à un circuit de commutation 132. Cette connexion 145 véhicule également un ordre d'écriture 145W et de lecture 145R appliqués à des entrées d'écriture et de lecture de la mémoire centrale 120.

Tel que représenté, le système est associé à une console d'exploitation 150 qui est reliée au circuit de gestion par l'accès bidirectionnel 107 indiqué précédemment sur les figures 1 et 2. Quant aux différentes entrées et sorties 101 à 106, elles sont reliées à des organes qui ont déjà été décrits à propos des figures 1 et 2 : l'entrée 101 est reliée à une source de composition de pages vidégraphiques 50, la sortie 102 un générateur de codes temporels 12, l'accès bidirectionnel 103 un magnétoscope 16 à travers une interface 22, l'entrée 104 à un lecteur de code temporel 24, la sortie 105 à un ensemble d'incrustation vidégraphique 28 et/ou un ensemble de décodage de pages vidégraphiques 34, et la sortie 106 à des grilles de commutation.

Le système représenté sur la figure 3 remplit, par les divers moyens qui le constituent, 9 fonctions différentes :

1. Le circuit générateur d'adresses 124 permet d'adresser séquentiellement la mémoire centrale 120 du système dans les phases de lecture et d'écriture de la mémoire. Ce circuit reçoit deux ordres d'activation 145, 145' émanant du circuit 140.

2. La capacité de la mémoire centrale 120 dépend de l'application retenue. Le bloc mémoire peut être réalisé à l'aide de boîtiers R.A.M. ("Random Acces Memory") statiques sur 8 éléments binaires.

3. Le circuit 128 de conversion assure l'adaptation entre le lecteur de code temporel (24 des figures 1 et 2) et le bus interne de données 114 du système. En effet, le lecteur de code temporel délivre des mots de 32 éléments binaires tandis que le bus interne travaille avec 8 éléments binaires. Le circuit 128 reçoit aussi un ordre externe d'activation 145.

4.Le circuit 126 de conversion reçoit des informations du système pour les présenter au générateur de code temporel (12 sur les figures 1 et 2) sous un bon format.

5.le circuit de sérialisation du code 130 adapte le code relatif aux pages vidéographiques issu de la mémoire centrale 126 en un code sérialisé conforme à l'Avis V 24 du CCITT.

6.Le circuit 134 de désérialisation du code vidéographique remplit la fonction opposée de celle du circuit précédent 130.

7.le circuit de gestion 140 est le noyau central du système. Il assure essentiellement :

- l'interface avec la console d'exploitation du système 150,
- un stockage temporaire de l'ensemble du code relatif à une page vidéographique,
- un stockage temporaire des directives pour le déroulement du programme,
- un aiguillage des ordres.

8.Le circuit d'interface-série 136 est bidirectionnel. Il reçoit, du circuit de gestion 140, les ordres à transmettre au magnétoscope 16 via l'interface de télécommande 22. Les informations en provenance de l'interface de télécommande de magnétoscope permettent d'activer le circuit de gestion.

9. Le circuit de commutation 132 reçoit des informations en provenance du circuit de gestion 140. Dans un réseau, ce circuit permet d'adresser les grilles de commutation audio et vidéo. En privatique, ce circuit élabore les signaux de commutations "rapide" et "lente" du téléviseur.

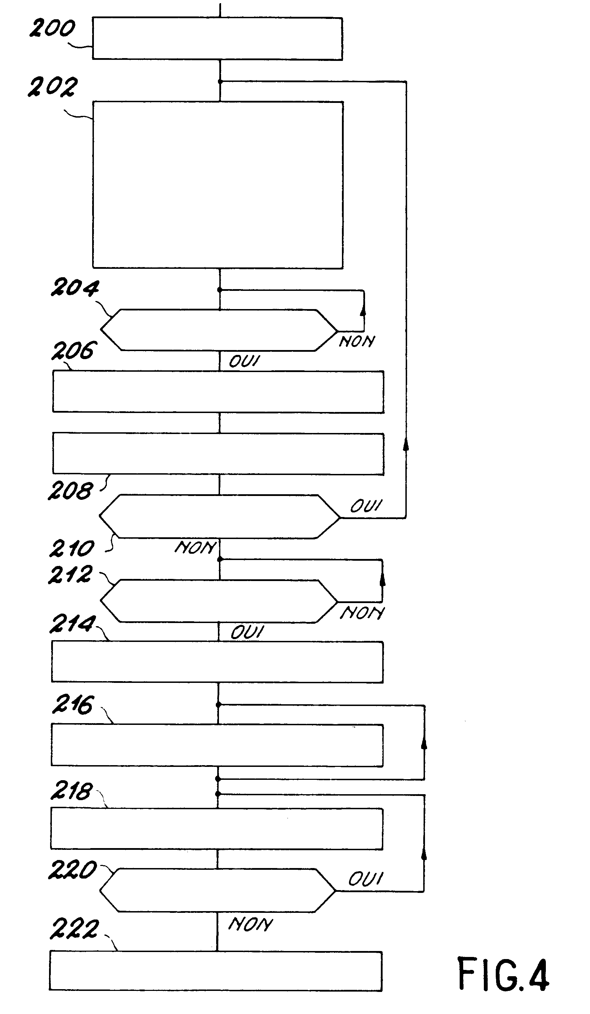

La figure 4 est un organigramme fonctionnel montrant les diverses opérations (cadres rectangulaires) ou tests (hexagones) effectués. Les opérations référencées ont la signification suivante :

200      - initialisation du système
202      - préparation :
           - de la page vidéographique à l'aide de la source de composition,
           - de l'en-tête de page (numéro et attribut de présentation),
           - du bloc des fonctions à réaliser,
204      - l'ordre de stockage est-il reçu ?
206      - réception par le système de l'ensemble des informations numériques
208      - stockage et rangement en mémoire
210      - y a-t-il une autre page à stocker ?
212      - l'ordre d'insertion est-il reçu ?
214      - positionner le magnétoscope
216      - boucle d'attente pour le positionnement du magnétoscope
218      - présenter l'ensemble du code au générateur de code temporel

220      - y a-t-il encore du code à enregistrer?
222      - arrêter le magnétoscope et rembobiner la bande magnétique.

Les opérations 202 à 208 constituent une phase de stockage et les opérations 214 à 220 une phase d'insertion. Ces opérations de stockage et d'insertion vont être décrites plus en détail.

La mise sous tension provoque l'initialisation complète du système. L'opérateur compose sa page vidéographique à l'aide de la source de composition 50 (figures 1-2) ou peut charger une page existante, issue d'un lecteur (optionnel) de disques souples 52.

Lors de la restitution de ces pages vidéographiques, le système devra pouvoir identifier chaque page vidéographique chargée en mémoire et connaître le mode de présentation de chaque page si les deux modes de présentation ont été retenus. Le mode de présentation est décrit par l'attribut de présentation précédant chaque page vidéographique. A cet effet, il est donc nécessaire de charger ou de mettre à jour les informations de numérotation et de présentation de chaque page, l'ensemble de ces deux informations constituant l'en-tête de chaque page vidéographique.

Pour des raisons de coût et de facilité d'exploitation, le système doit permettre d'assurer une automatisation totale de son environnement. Un bloc des "fonctions à réaliser" est enregistré, si nécessaire, après l'ensemble des informations binaires relatives à chaque page vidéographique.

Les fonctions sont écrites avant chaque action à réaliser et permettent d'assurer les fonctions suivantes :

- la télécommande des grilles de commutation 38 et 40,
- le pilotage du magnétoscope 16 à partir d'ordres simples : lecture, arrêt, pause, bobinage rapides dans les deux sens,
- le positionnement du magnétoscope au début d'une séquence,
- la définition de l'instant de début de lecture d'une page vidéographique,
- la définition de la durée de présentation de cette même page.

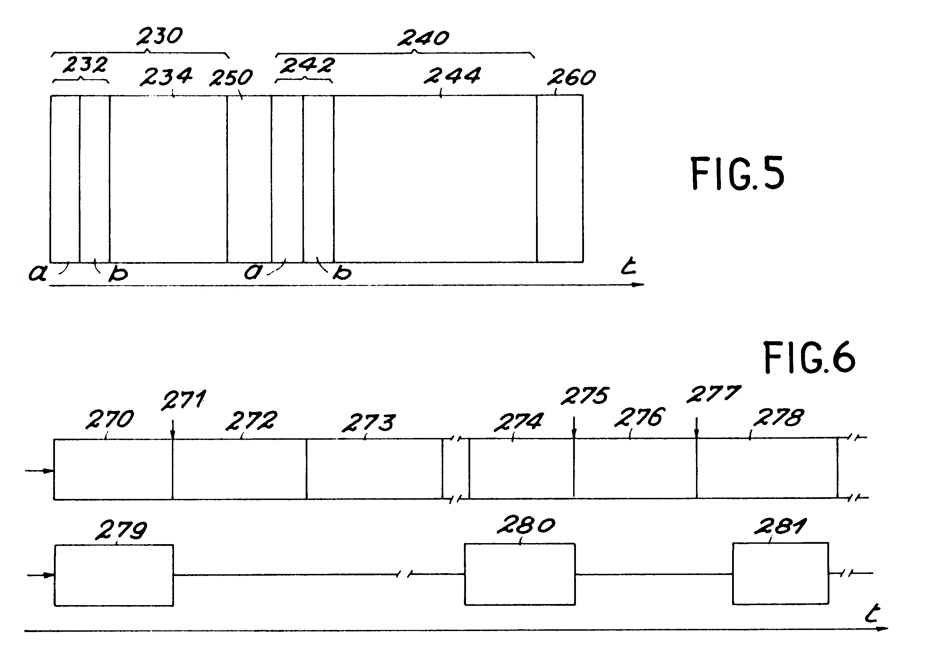

La structure de l'ensemble des informations binaires à enregistrer est décrite en figure 5. Celles-ci sont effectivement stockées par le système, lorsque l'opérateur valide l'ordre de STOCKAGE. La signification des divers emplacements référencés est la suivante :

230      - Ensemble des informations binaires relatives à la page n
232      - En-tête de la page n avec numéro de page n (a) et attribution de présentation (b)
234      - code vidéographique relatif à la page n

240     - Ensemble des informations binaires relatives à la page n + 1

242     - En-tête de la page n + 1 avec numéro de page n + 1 (a) et attribut de présentation (b)

244     - code vidéographique relatif à la page n + 1

250     - bloc des "fonctions à réaliser"

260     - blocs des "fonctions à réaliser".

Le processus décrit ci-dessus est répété autant de fois qu'il y a de pages à stocker dans la mémoire du système. L'incrémentation du numéro de page est alors effectuée de façon automatique par le système.

Le processus de stockage terminé, l'opérateur peut alors enregistrer sur la bande magnétique contenant le programme audiovisuel, l'ensemble de ces différentes informations en validant l'ordre d'INSERTION.

L'opérateur repère de façon visuelle, les instants de présentation des pages vidéographiques ou d'exécution des commandes. Le système permet de s'assurer que l'enregistrement des données numériques se fait en amont du point correspondant à l'instant de présentation.

L'opérateur peut connaître et relever la valeur prise par le code temporel à cet instant à l'aide de l'interface 22 de télécommande du magnétoscope. Cet instant étant chargé dans le système, le magnétoscope va se positionner automatiquement à l'endroit voulu.

La figure 6 précise la relation qui doit exister entre le programme audiovisuel et les séquences de pages vidéographiques.

Sur cette figure les zones référencées ont la signification suivante :

270     - lecture du programme audiovisuel

271     - changement de plan dans le programme audiovisuel

272     - présentation de la page "n" en mode page

273     - présentation de la page "n + 1" en mode page

274     - suite du programme audiovisuel

275     - instant du début d'incrustation de la page p

276     - lecture du programme avec page p en incrustation

277     - instant du début d'incrustation de la page p + 1

278     - lecture du programme avec page p + 1 en incrustation

279     - chargement en mémoire des pages n et n + 1

280     - chargement en mémoire des pages p et p + 1

281     - chargement en mémoire de la page p + 2.

Le magnétoscope s'étant positionné à l'endroit calculé par le système 100, l'interface de télécommande envoie au système un caractère particulier. L'enregistrement du code peut alors avoir lieu. Le système 100 lit l'ensemble des informations chargées en mémoire et le présente au générateur de code temporel 12 selon le bon format, c'est-à-dire sous forme de paquets de 32 éléments binaires en synchronisme avec l'image de télévision.

Ces 32 éléments binaires sont alors sérialisés et multiplexés par le générateur de code temporel 12 pour être enregistrés sur une piste du magnétoscope 16, afin d'accompagner le programme audiovisuel. Seule, la partie du code temporel relative à l'emplacement physique d'insertion des pages vidéographiques est réécrite.

Lorsque l'ensemble des informations binaires est enregistré, le système 100 doit arrêter le magnétoscope et rembobiner la bande magnétique à son début.

On peut observer à ce stade qu'il est possible de prévoir un stockage des éléments binaires par page ou par bloc de plusieurs pages vidéographiques. Ces deux modes opératoires ne modifient que la taille de la mémoire interne du système. L'enregistrement sur bande est donc fait soit par petits bouts, soit de façon continue.

Le temps de présentation de chaque page vidéographique est inscrit dans le bloc des "fonctions à réaliser". Cette solution permet d'adapter le temps de présentation au contenu de chaque page vidéographique.

Le bloc des "fonctions à réaliser" peut aussi contenir par exemple des ordres de télécommande d'une source sonore afin d'accompagner éventuellement les pages vidéographiques présentées en mode "page".

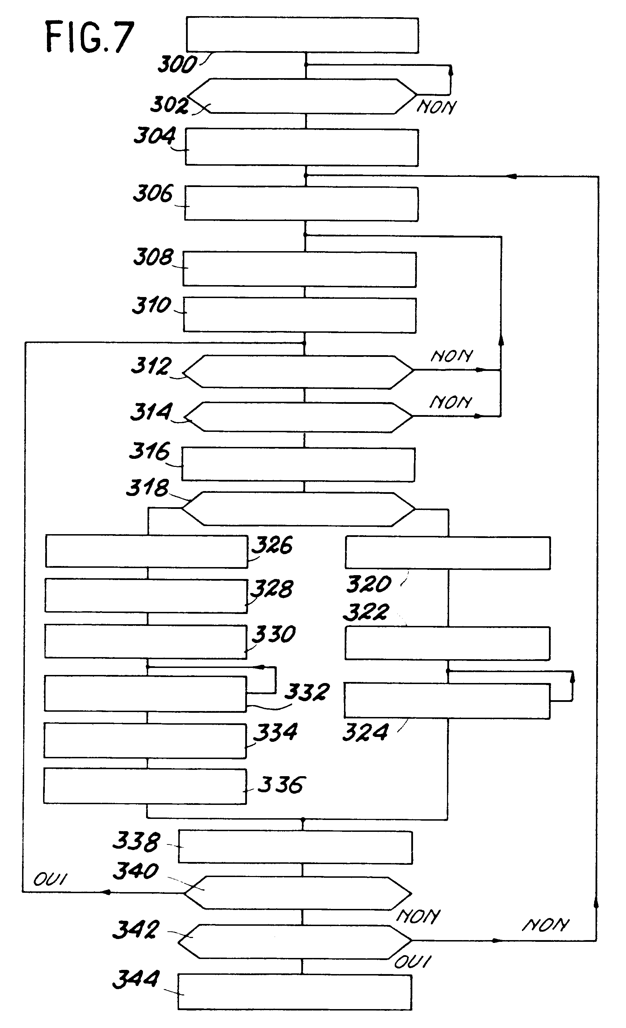

On va décrire maintenant la phase de lecture des données numériques. L'organigramme correspondant est représenté sur la figure 7. Les opérations référencées sont les suivantes :

300     - préciser la liste des pages vidéographiques à présenter

302     - l'ordre de lecture de pages vidéographiques est-il reçu ?

304     - positionnement de la bande magnétique en début de programme

306     - lecture de la bande magnétique

308     - extraction des bits utilisateur du code temporel

310     - stockage en mémoire des informations relatives aux pages vidéographiques

312     - l'instant de lecture des pages est-il atteint ?

314     - parmi les pages mémorisées y-en-a-t-il à visualiser ?

316     - lire l'attribut de présentation de la page

318     - quel est ce mode de présentation ?

320     - décoder la page vidéographique

322     - présenter la page vidéographique en mode "incrustation"

324     - temporisation de présentation en mode "incrustation" de cette page

326     - décoder la page vidéographique

328     - commuter les grilles et arrêter le magnétoscope

330     - présenter la page vidéographique en mode "page"

332     - temporisation de présentation en mode "page" de cette page

334     - positionnement du magnétoscope et mise en lecture

336     - commuter les grilles sur le magnétoscope

338     - mise à jour des pages à présenter

340     - y-a-t-il encore des pages à présenter ?

342     - le programme audiovisuel est-il fini ?

344     - arrêt du magnétoscope et rembobinage de la bande magnétique.

Avant la lecture du programme audiovisuel, l'opérateur doit spécifier au système la liste des pages vidéographiques qui accompagnent le programme audiovisuel.

La réception de l'ordre de LECTURE provoque la mise en marche du magnétoscope assurant ainsi la lecture du programme audiovisuel et du code temporel qui lui est associé.

Le lecteur de code temporel 24 désérialise le code lu et restitue au système le contenu des "bits utilisateur" au rythme de 32 éléments binaires par image de télévision. Le système stocke l'ensemble de ces informations en mémoire (en-tête, code relatif à chaque page et bloc des "fonctions à réaliser").

L'information "temps" issue de l'interface de télécommande du magnétoscope est transférée au système. Une comparaison est faite entre le temps lu et les instants de début de lecture de chaque page vidéographique contenus dans le bloc des "fonctions à réaliser". Lorsqu'un instant de lecture vient d'être atteint, la lecture de l'attribut de présentation de la page vidéographique permet de réaliser le mode de présentation stipulé dans cet attribut.

Tous les déplacements de la bande magnétique sont décrits dans le bloc des "fonctions à réaliser".

Après chaque lecture d'une ou plusieurs pages vidéographiques, la table de diffusion des pages vidéographiques est mise à jour automatiquement par le système.

Le processus décrit ci-dessus est répété autant de fois qu'il y a de pages vidéographiques à présenter. Lorsqu'une série de pages vient d'être présenter, les informations binaires en provenance du lecteur de code temporel sont implantées de nouveau, dans la mémoire centrale du système.

Après lecture de la dernière page vidéographique contenue sur la bande magnétique, la lecture du bloc des "fonctions à réaliser" permet d'arrêter le magnétoscope après la dernière image du programme audiovisuel et, facultativement, de rembobiner complètement la bande magnétique.

Le mode de fonctionnement qui vient d'être décrit correspond à un mode de lecture en temps différé, des pages vidéographiques. Le mode de lecture de ces pages en temps réel est envisageable dans le cas d'une utilisation en sous-titrage par exemple.

Le système proposé permet d'assurer ce mode de fonctionnement. Dans ce cas précis, le bloc des "fonctions à réaliser" ne contient plus les instants de début de lecture de chaque page vidéographique. Par ailleurs, son contenu reste inchangé et les informations contenues dans ce bloc permettent d'assurer une automatisation du système (commutations, déplacements de la bande magnétique, etc...).

Après cette description des différents moyens du système de l'invention, le fonctionnement du système va être décrit en distinguant la phase d'enregistrement des données numériques ou phase d'insertion, puis la phase de lecture ou phase de restitution.

L'enregistrement des données numériques comprend tout d'abord une opération de stockage des données dans le système. Avant de mettre en mémoire une page vidéographique réalisée à l'aide de la source de composition, l'opérateur doit remplir l'en-tête et le "bloc des fonctions" relatifs à cette page vidéographique.

Le dialogue entre l'opérateur et le système s'effectue sur la console d'exploitation du système 150. Il faut que l'opérateur connaisse l'instant du début de présentation de chaque page, valeur à placer ensuite dans le bloc des "fonctions à réaliser".

Les touches de fonction du magnétoscope 16 sont déportées sur le clavier de la console d'exploitation et les fonctions télécommandables du magnétoscope sont : lecture, arrêt, pause sur image, rembobinage dans les deux sens, demande du numéro de l'image courante, valeur définie par le code temporel lui-même. Cette valeur est affichée en temps réel sur la console d'exploitation. Le circuit de gestion reçoit les ordres en provenance de l'opérateur et adapte ceux-ci en fonction des codes reconnus par l'interface de télécommande du magnétoscope 22.

Le circuit peut aussi transmettre des informations, devant être affichées sur la console. Ces informations "remontantes" sont par exemple la valeur prise par le code temporel à un instant donné.

Le circuit d'interface série 136 sérialise les informations destinées à l'interface de télécommande du magnétoscope. Le raccordement est effectué à l'aide d'une liaison V 24 entre le circuit de gestion et l'interface de télécommande du magnétoscope. Le circuit est bidirectionnel.

L'interface de télécommande du magnétoscope 22 extérieur au système 100 est raccordé à la prise de télécommande parallèle du magnétoscope. D'autre part, cette interface reçoit le code temporel issu du magnétoscope et se trouve raccordé au système par la liaison V 24.

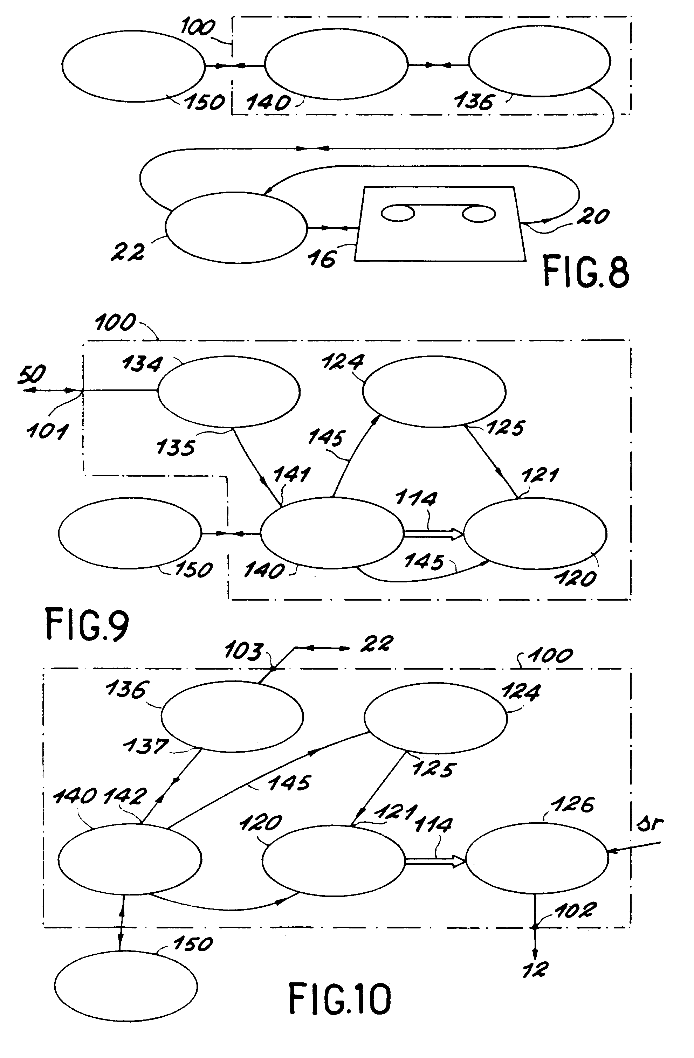

Les circuits mis en jeu lors de cette opération de définition des instants de visualisation des pages sont représentés dans la figure 8.

L'opérateur peut alors relever la valeur du code temporel correspondant à l'instant de début de présentation défini visuellement. L'en-tête et le bloc des "fonctions" sont composés à partir de la console d'exploitation et stockés temporairement dans le circuit de gestion.

La mise en mémoire s'effectue ensuite lorsque l'opérateur valide la touche STOCKAGE sur la console d'exploitation du système.

Le circuit 134 de désérialisation du code vidéographique est raccordé, d'une part, à la source de composition 50 à l'aide d'une liaison de type V 24, et d'autre part au circuit de gestion 140.

Le circuit de gestion adapte et tamponne le code vidéographique en provenance de la source de composition afin d'être compatible avec le format du bloc mémoire du système. Une synchronisation des échanges est aussi assurée par ce circuit de gestion.

L'activation de la touche STOCKAGE de la console d'exploitation place la mémoire centrale 120 en mode écriture, mode défini par le circuit de gestion. Séquentiellement, les informations relatives :

- à l'en-tête de la page,
- au code vidéographique de la page,
- au bloc des "fonctions à réaliser",

sont rangées dans la mémoire centrale du système.

Le circuit générateur d'adresses 124, permet d'adresser séquentiellement la mémoire. L'ordre d'activation de ce circuit provient du circuit de gestion 140. Il est activé lorsqu'il y a des informations binaires à enregistrer.

Cette opération de mise en mémoire du code relatif à une page fait appel aux circuits décrits dans la figure 9.

A ce niveau, l'ensemble des codes relatifs à une page vidéographique est chargé en mémoire. Lorsque l'opérateur souhaite stocker une séquence de plusieurs pages vidéographiques, il est prévu une incrémentation automatique des numéros de pages. Cette incrémentation est faite par le circuit de gestion.

La seconde opération de la phase d'enregistrement des données est une opération d'insertion de ces données sur la bande magnétique. Pendant la phase d'insertion d'un ensemble de pages, celles-ci sont sauvegardées temporairement dans la mémoire centrale du système. Les informations binaires accompagnant le programme audiovisuel doivent être enregistrées en "amont" de l'instant de diffusion écrit dans le bloc des "fonctions à réaliser" (cf figure 6).

Au moyen des fonctions de télécommande du magnétoscope, il est possible de déterminer l'instant de début d'enregistrement du code. Dans le cas de l'invention, la valeur prise par le code temporel doit être inférieure au code temporel relatif à l'instant de présentation.

Les circuits mis en oeuvre dans cette phase sont identiques aux circuits décrits dans la figure 8. Le processus d'insertion est activé lorsqu'une touche INSERTION est validée. L'ordre de positionnement est alors envoyé au magnétoscope sur l'image de début d'enregistrement du code. Un caractère particulier émanant de l'interface de télécommande du magnétoscope remonte au circuit de gestion via le circuit d'interface série. La réception de ce caractère place le magnétoscope en enregistrement.

Après une temporisation de quelques secondes, programmée dans le circuit de gestion, les informations binaires contenues dans la mémoire centrale sont écrites dans les "bits utilisateur" du code temporel. Cette temporisation est nécessaire et permet de tenir compte des temps de démarrage et d'asservissement du magnétoscope.

Le circuit de gestion 140 place alors la mémoire centrale 120 en mode "lecture". Une fois la temporisation écoulée, cette mémoire est adressée séquentiellement par le générateur d'adresses 124 et les informations transmises par le bus des données 114 sont prises en compte dans le circuit de conversion 126 de 8 en 32 éléments binaires. Les échanges doivent être faits en synchronisme avec le signal "image". A cet effet, le circuit de conversion reçoit un signal de référence image.

Lorsque ce transfert de la mémoire 120 vers la bande magnétique est terminé, le circuit de gestion 140 envoie un ordre d'arrêt au magnétoscope 16, via le circuit d'interface série 136 et l'interface 22 de télécommande du magnétoscope.

Les blocs de fonction utilisés à ce niveau sont regroupés dans la figure 10.

Le dernier bloc des "fonctions à réaliser" contient un ordre de rembobinage complet de la bande ; cet ordre permet de rembobiner automatiquement la bande magnétique lorsque la présentation du programme audiovisuel sera terminée.

La seconde phase du processus est une phase de lecture des données numériques. Un ensemble de pages vidéographiques ainsi que des directives sur le déroulement du programme audiovisuel sont contenues sur la bande magnétique. Comme déjà souligné, la présentation de ces pages peut être facultative. Il est donc nécessaire de mémoriser dans le circuit de gestion la liste des pages devant être présentées pour accompagner et enrichir le programme audiovisuel d'origine.

L'opérateur prépare la liste des pages présenter à l'aide de la console d'exploitation 150, puis les informations correspondantes sont prises en compte par le circuit de gestion 140. On peut distinguer l'opération de chargement de la mémoire et de lecture de celle-ci.

Dans l'opération de chargement de la mémoire, la réception de l'ordre de LECTURE par le circuit de gestion 140 place le magnétoscope en mode lecture, cet ordre étant envoyé par le circuit de gestion à travers le circuit d'interface série 136.

Simultanément, la mémoire centrale 120 est placée en mode "écriture", par un ordre 145W issu du circuit de gestion 140. Cette mémoire est adressée séquentiellement par le circuit générateur d'adresses 124 qui est activé à cet instant.

Le code en provenance du lecteur de code temporel 24, est transmis au circuit 128 de conversion de 32 en 8 éléments binaires. L'ensemble du code relatif aux pages vidéographiques est donc chargé en mémoire. Le générateur d'adresse est activé tant que le circuit de conversion 128 de 32 en 8 éléments binaires reçoit des informations binaires en provenance du lecteur de code temporel.

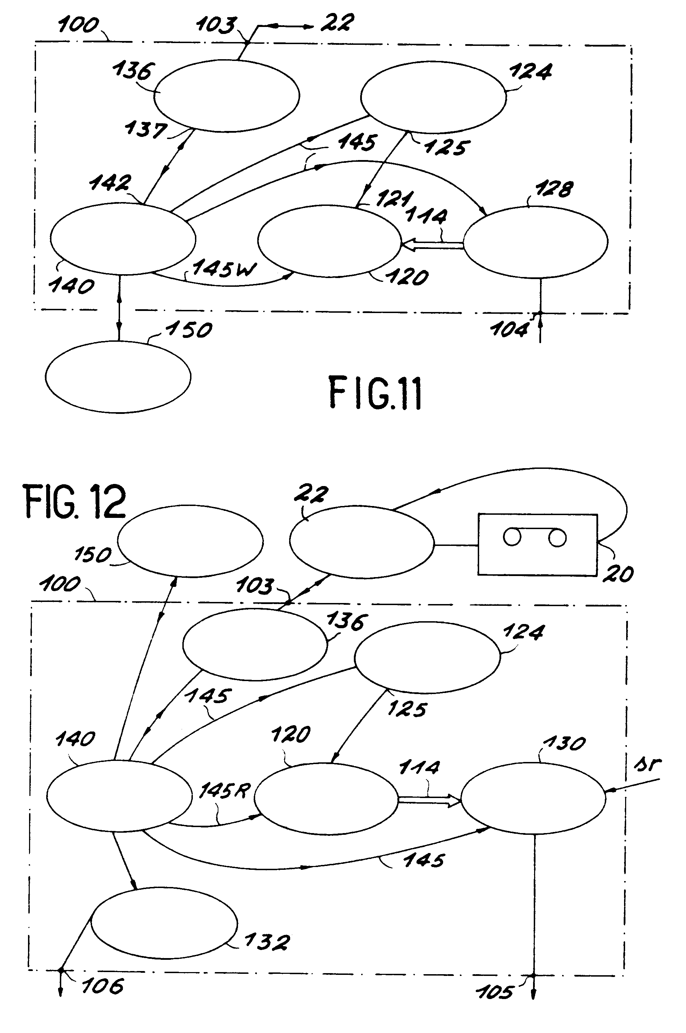

Une comparaison est faite en permanence entre l'information "temps" issue de l'interface 22 de télécommande du magnétoscope 16 et les instants de présentation contenus dans le bloc des "fonctions réaliser". Les circuits utilisés dans cette phase de remplissage de la mémoire sont présentés en figure 11.

Lors de l'opération de lecture de la mémoire, lorsque la comparaison est vérifiée entre l'information "temps" et un instant de présentation, le circuit de gestion établit une correspondance entre les pages chargées en mémoire et la liste des pages qui doivent être présentées. Les pages chargées en mémoire sont identifiées par leur numéro tandis que la liste des pages à présenter est contenue dans le circuit de gestion. Par ailleurs, la mémoire 120 est placée en mode "lecture" par un ordre 145R issu du circuit de gestion 140.

La lecture de la mémoire 120 alimente le circuit 130 de sérialisation du code validé à cet instant par le circuit de gestion. Ce circuit a pour fonction de sérialiser le code vidéographique transmis en simultané à l'ensemble de décodage des pages 34 et à l'ensemble d'incrustation vidéographique 28. Le même circuit est raccordé au bus interne de données 114.

Le choix de l'un des ensembles de présentation est réalisé par la lecture de l'attribut de présentation, décrit dans l'en-tête de chaque page vidéographique. Cette information issue du circuit de gestion est transmise au circuit de commutation, la sélection du mode de présentation étant faite à ce niveau. Le circuit d'interface série 136 assure une automatisation du magnétoscope 20 à travers l'interface de télécommande 22.

Les circuits mis en oeuvre dans cette phase de lecture de la mémoire sont présentés dans la figure 12.

**Revendications**

1. Système d'insertion de données numériques dans un code temporel longitudinal ou vertical lié à un programme audiovisuel enregistré sur magnétoscope et de restitution de ces données lors de la lecture de ce programme audiovisuel, le magnétoscope étant précédé d'un générateur de code temporel (12) et suivi d'un lecteur de code temporel (24) travaillant tous deux sur q éléments binaires, ces données étant insérées et lues dans des éléments binaires dits "utilisateur" du code temporel, ces éléments étant au nombre de q par image enregistrée, ce système étant caractérisé en ce que :

A) il comprend les moyens suivants :

a) une mémoire centrale (120) ayant une entrée d'adressage (121) et des entrées-sorties d'écriture-lecture (122),

b) un circuit générateur d'adresses (124) ayant une sortie (125) reliée a l'entrée d'adressage (121) de la mémoire centrale,

c) un bus interne (114) véhiculant des mots à p éléments binaires et relié aux entrées-sorties (122) de la mémoire,

d) un circuit de conversion numérique (126) recevant des mots de p éléments binaires et délivrant des mots de a éléments binaires, ce circuit ayant une entrée (127) reliée au bus interne (114) et une sortie (102) apte à être reliée à un générateur de code temporel (12) extérieur au système,

e) un circuit de conversion numérique (128) recevant des mots de a éléments binaires et délivrant des mots de p éléments binaires, ce circuit ayant une entrée (104) apte à être reliée à un lecteur de code temporel (24) extérieur au système et une sortie (129) reliée au bus interne (114),

f) un circuit de sérialisation du code (130) ayant une entrée (131) reliée au bus (114) et une sortie (105) apte à être reliée à un ensemble de décodage de pages vidéographiques (34) ou d'incrustation vidéographique (28) tous deux extérieurs au système,

g) un circuit de commutation (132) ayant une sortie (106) apte à être reliée à des organes de commutation extérieurs au système (38, 40, 70),

h) un circuit (134) de désérialisation de code vidéographique à une entrée (101) apte à être reliée à une source de composition de pages vidéographiques extérieure au système (50) et une sortie (135) délivrant un code vidéographique,

i) un circuit d' interface série (136) ayant un accès bidirectionnel (137) et une sortie (103, 138) apte à être reliée à un magnétoscope (16) extérieur au système, via une interface (22) de télécommande de ce magnétoscope,

j) un circuit de gestion (140) ayant un premier accès (141) relié à la sortie (135) du circuit de désérialisation du code vidéographique (134), un deuxième accès (142) relié à l'accès (137) du circuit interface série (136), un troisième accès (143) relié au bus (114) un quatrième accès (144) apte à être relié à une console d'exploitation (150) extérieure au système, tous ces accès étant bidirectionnels, une sortie délivrant des ordres d'activation (145) adressés aux divers circuits (124, 126, 128, 130, 132), des ordres d'écriture (145W) ou de lecture (145R) pour la mémoire centrale (120),

B) lesdits moyens coopèrent pour remplir les fonctions suivantes :

k) le circuit générateur d'adresses (124) adresse séquentiellement la mémoire centrale (120) du système dans les phases de lecture et d'écriture de la mémoire, ce circuit recevant deux ordres d'activation (145, 145') émanant du circuit de gestion (140),

l) le circuit de conversion numérique (128) assure l'adaptation entre un lecteur de code temporel (24) travaillant avec q éléments binaires et le bus interne de données (114) du système travaillant avec p éléments binaires,

m) le circuit de conversion numérique (126) reçoit des informations du système sur p éléments binaires et les présente à un générateur de code temporel (12) sous q éléments binaires,

n) le circuit de sérialisation du code (130) adapte le code relatif aux pages vidéographiques issu de la mémoire centrale (120) en un code sérialisé normalisé,

o) le circuit (134) de désérialisation du code vidéographique remplit la fonction opposée de celle du circuit précédent (130),

p) le circuit de gestion (140) assure notamment :

- l'interface avec une console d'exploitation du système (150),
- un stockage temporaire de l'ensemble du code relatif à une page vidéographique,
- un stockage temporaire des directives pour le déroulement du programme,
- un aiguillage des ordres,

q) le circuit d'interface-série (136) reçoit, du circuit de gestion (140), des ordres à transmettre au magnétoscope (16) via une interface de télécommande (22) et reçoit des informations en provenance de l'interface de télécommande de magnétoscope et destinées à activer le circuit de gestion,

r) le circuit de commutation (132) reçoit des informations en provenance du circuit de gestion (140) et adresse des grilles de commutation audio et vidéo ou élabore les signaux de commutation d'un téléviseur.

**Claims**

1. System for the insertion of digital data into a longitudinal or vertical time code associated with an audiovisual programme recorded on a video tape recorder and for the retrieval of this data when playing back that audiovisual programme, the video tape recorder being preceded by a time code generator (12) and followed by a time code reader (24) both working with q bits, this data being inserted and read back in bits called "user" bits of the time code, the quantity of these bits being q per recorded image, this system being characterised in that:

A) it comprises the following means:

a) a central memory (120) having an addressing input (121) and read-write inputs-outputs (122),

b) an address generator circuit (124) having an output (125) connected to the addressing input (121) of the central memory,

c) an internal bus (114) carrying words of p bits and connected to the inputs-outputs (122) of the memory,

d) a digital conversion circuit (126) receiving words of p bits and supplying words of q bits, this circuit having an input (127) connected to the internal bus (114) and an output (102) suitable for being connected to a time code generator (12) which is external to the system,

e) a digital conversion circuit (128) receiving words of q bits and supplying words of p bits, this circuit having an input (104) suitable for being connected to a time code reader (24) which is external to the system and an output (129) connected to the internal bus (114),

f) a circuit for serialising the code (130) having an input (131) connected to the bus (114) and an output (105) suitable for being connected to an assembly for decoding videographic pages (34) or for videographic picture-in-picture inlaying (28), both external to the system,

g) a switching circuit (132) having an output (106) suitable for being connected to switching units which are external to the system (38, 40, 70),

h) a circuit (134) for deserialising videographic code having an input (101) suitable for being connected to a source of composition of videographic pages external to the system (50) and an output (135) supplying a videographic code,

i) a serial interface circuit (136) having a bidirectional port (137) and an output (103, 138) suitable for being connected to a video tape recorder (16) external to the system, via an interface (22) for the remote control of that video tape recorder,

j) a management circuit (140) having a first port (141) connected to the output (135) of the circuit for deserialising the videographic code (134), a second port (142) connected to the port (137) of the serial interface circuit (136), a third port (143) connected to the bus (114), a fourth port (144) suitable for being connected to an operating console (150) which is external to the system, all of these ports being bidirectional, an output supplying actuating commands (145) addressed to the various circuits (124, 126, 128, 130, 132), write commands (145W) or read commands (145R) for the central memory (120),

B) the said means work in conjunction to provide the following functions:

k) the address generating circuit (124) sequentially addresses the central memory (120) of the system during the read and write phases of the memory, this circuit receiving two actuating commands (145, 145') coming from the management circuit (140),

l) the digital conversion circuit (128) provides matching between a time code reader (24) working with q bits and the internal data bus (114) of the system working with p bits,

m) the digital conversion circuit (126) receives information from the system in p bits and presents them to a time code generator (12) in q bits,

n) the circuit (130) for serialising the code adapts the code relating to the videographic pages coming from the central memory (120) into a standard serialised code,

o) the circuit (134) for deserialising the videographic code carries out the opposite function to that of the preceding circuit (130),

p) the management circuit (140) provides, in particular:

- the interface with an operating console for the system (150),
- a temporary storage of all of the code relating to a videographic page,
- a temporary storage of instructions for the running of the programme,
- a routing of commands,

q) the serial interface circuit (136) receives, from the management circuit (140), commands to be transmitted to the video tape recorder (16) via a remote control interface (22) and receives information coming from the video tape recorder remote control interface and intended for actuating the management circuit,

r) the switching circuit (132) receives information coming from the management circuit (140) and addresses audio and video switching grids or generates the switching signals of a television set.

**Patentansprüche**

1. System zum Einfügen von digitalen Daten in einen longitudinalen oder vertikalen Zeitkode, der mit einem audiovisuellen Programm verbunden ist, das auf einem Videobandaufzeichnungsgerät aufgezeichnet ist, und zum Wiederherstellen dieser Daten beim Lesen dieses audiovisuellen Programms, wobei dem Videobandaufzeichnungsgerät ein Generator für Zeitkode (12) voran gestellt ist und dieses von einem Lesegerät für Zeitkode (24) gefolgt wird, die alle beide auf q binären Elementen arbeiten, wobei diese Daten in die "Benutzer" genannten binären Elemente des Zeitkodes eingesetzt und gelesen werden, wobei diese Elemente von der Zahl q pro aufgezeichnetes Bild sind, wobei das System dadurch gekennzeichnet ist, daß:

A) es die folgenden Vorrichtungen umfaßt:

a) einen Hauptspeicher (120) mit einem Adresseingang (121) und Schreib-Lese-Ein/Ausgängen (122),

b) einen Schaltkreis zum Erzeugen von Adressen (124) mit einem Ausgang (125), der mit dem Adresseingang (121) des Hauptspeichers verbunden ist,

c) einen internen Bus (114), der Wörter aus p binären Elementen überträgt und mit den Ein/Ausgängen (122) des Speichers verbunden ist,

d) einen Schaltkreis zur digitalen Umwandlung (126), der Wörter aus p binären Elementen empfängt und Wörter aus q binären Elementen erzeugt, wobei dieser Schaltkreis einen Eingang (127), der mit dem internen Bus (114) verbunden ist, und einen Ausgang (102) besitzt, der geeignet ist, mit einem Generator von Zeitkode (12) außerhalb des Systems verbunden zu werden,

e) einen Schaltkreis zur digitalen Umwandlung (128), der Wörter aus q binären Elementen empfängt und Wörter aus p binären Elementen erzeugt, wobei dieser Schaltkreis einen Eingang (104), der geeignet ist, mit einem Generator von Zeitkode (24) außerhalb des Systems verbunden zu werden, und einen Ausgang (129) besitzt, der mit dem internen Bus (114) verbunden ist,

f) einen Schaltkreis zum Serialisieren des Kodes (130) mit einem mit dem Bus (114) verbundenen Eingang (131) und einem Ausgang (105), der geeignet ist, mit einer Dekodieranordnung für Videoseiten (34) oder für Videoeinsätze (28), die beide außerhalb des Systems sind, verbunden zu werden,

g) einen Kommutatorschaltkreis (132) mit einem Ausgang (106), der geeignet ist mit außerhalb des Systems befindlichen Kommutatorelementen (38, 40, 70) verbunden zu werden,

h) einen Schaltkreis zum Entserialisieren (134) des Videokodes an einem Eingang (101), der geeignet ist mit einer Quelle zum Zusammensetzen von Videoseiten außerhalb des Systems (50) und einem Ausgang (135), der einen Videokode erzeugt, verbunden zu werden,

i) einen seriellen Schnittstellenschaltkreis (136) mit bidirektionellem Zugriff (137) und einem Ausgang (103, 138), der geeignet ist, mit einem Videoaufzeichnungsgerät (16) außerhalb des Systems über eine Fernsteuerungsschnittstelle (22) dieses Videoaufzeichnungsgeräts verbunden zu werden,

j) einem Verarbeitungsschaltkreis (140) mit einem ersten Zugriff (141), der mit dem Ausgang (135) des Deserialisationsschaltkreises für den Videokode (134) verbunden ist, einem zweiten Zugriff (142), der mit dem Zugriff (137) des seriellen Schnittstellenschaltkreises (136) verbunden ist, einem dritten Zugriff (143), der über den Bus (114) mit einem vierten Zugriff (144) verbunden ist, der geeignet ist, mit einer Betriebskonsole außerhalb des Systems verbunden zu werden, wobei all diese Zugriffe bidirektionell sind, wobei ein Ausgang Aktivierungsbefehle (145), die an verschiedene Schaltkreise (124, 126, 128, 130, 132) adressiert sind, Schreibbefehle (145W) oder Lesebefehle (145R) für den Hauptspeicher (120) erzeugt,

B) die genannten Vorrichtungen zusammenwirken, um die folgenden Funktionen durchzuführen:

k) der Generatorschaltkreis für Adressen (124) adressiert sequentiell den Hauptspeicher (120) des Systems in den Lese- und Schreibphasen des Speichers, wobei dieser Schaltkreis zwei Aktivierungsbefehle (145, 145') erhält, die von dem Verarbeitungsschaltkreis (140) stammen,

l) der Schaltkreis zur digitalen Umwandlung (128) stellt die Anpassung zwischen einem Lesegerät (24) des Zeitkodes, der mit q binären Elementen arbeitet, und dem internen Datenbus (114) des Systems, der mit p binären Elementen arbeitet, sicher,

m) der digitale Umwandlungsschaltkreis (126) erhält Systeminformationen über p binäre Elemente und stellt sie einem Generator (12) für Zeitkode als q binäre Elemente zur Verfügung,

n) der Serialisationsschaltkreis für den Kode (130) wandelt den Kode für die Videoseiten, der von dem Hauptspeicher (120) erzeugt wird, in einen normalisierten, serialisierten Kode um,

o) der Deserialisationsschaltkreis (134) für den Videokode erfüllt die dem vorhergehenden Schaltkreis entgegensetzte Funktion,

p) der Verarbeitungsschaltkreis (140) stellt insbesondere sicher:

- die Schnittstelle mit einer Betriebskonsole des Systems (150),
- eine zeitweilige Speicherung des gesamten Kodes bezüglich einer Videoseite,
- eine zeitweilige Speicherung der Anweisungen zum Ablauf des Programms,
- eine Befehlsverzweigung,

q) der serielle Schnittstellenschaltkreis (136) erhält von dem Verarbeitungsschaltkreis (140) Befehle, die über eine Fernsteuerungsschnittstelle (22) an das Videoaufzeichnungsgerät (16) zu übertragen sind, und erhält Informationen, die von der Fernsteuerungsschnittstelle des Videoaufzeichnungsgeräts stammen und dazu bestimmt sind, den Verarbeitungsschaltkreis zu aktivieren,

r) der Kommutationsschaltkreis (132) erhält Informationen, die von dem Verarbeitungsschaltkreis (140) stammen, und adressiert die Audio- und Videokommutatorgatter oder erarbeitet die Kommutatorsignale für ein Fernsehgerät.

FIG.1

EP 0 201 431 B1

FIG.2

FIG.3

FIG.4

FIG.5

FIG.6

EP 0 201 431 B1

# FIG.7

300
302 — NON
304
306
308
310
312 — NON
314 — NON
316
318
326
328
330
332
334
336
320
322
324
338
340 — NON
342 — NON
344
OUI
OUI

FIG.8

FIG.9

FIG.10

FIG.11

FIG. 12